# EUROPEAN PATENT SPECIFICATION

(11) **EP 4 199 582 B1**
(45) Date of publication and mention of the grant of the patent: **06.08.2025**
(21) Application number: 21855223.0
(22) Date of filing: 17.06.2021
(51) Int. Cl.: H04W 36/00, H04W 4/06

(54) **MBS DATA TRANSMISSION METHOD, NETWORK SIDE APPARATUS, AND DEVICE**
MBS-DATENÜBERTRAGUNGSVERFAHREN, NETZWERKSEITIGE VORRICHTUNG UND VORRICHTUNG
PROCÉDÉ DE TRANSMISSION DE DONNÉES MBS, APPAREIL CÔTÉ RÉSEAU ET DISPOSITIF

(30) Priority: 14.08.2020 CN 202010820157
(43) Date of publication of application: 21.06.2023
(73) Proprietor: Datang Mobile Communications Equipment Co., Ltd., Beijing 100085 (CN)
(72) Inventor: ZHANG, Dajun, Beijing 100085 (CN)
(74) Representative: Ipsilon
(86) International application number: PCT/CN2021/100708
(87) International publication number: WO 2022/033168

(56) References cited:
- WO-A1-2008/046337
- CN-A- 101 442 714
- KR-A- 20200 007 042
- US-A1- 2011 292 859
- ERICSSON: "Mobility for NR MBS", vol. RAN WG2, no. Electronic meeting; 20200817 - 20200828, 6 August 2020 (2020-08-06), XP051911084, Retrieved from the Internet <URL:https://ftp.3gpp.org/tsg_ran/WG2_RL2/TSGR2_111-e/Docs/R2-2007628.zip R2-2007628 Mobility for NR MBS.docx> [retrieved on 20200806]
- ERICSSON: "Mobility for NR MBS", 3GPP DRAFT; R2-2007628, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic meeting; 20200817 - 20200828, 6 August 2020 (2020-08-06), Mobile Competence Centre ; 650, route des Lucioles ; F-06921 Sophia-Antipolis Cedex ; France , XP051911084
- ERICSSON: "KI #1, New Sol: Xn Handover of MB Sessions", 3GPP DRAFT; S2-2004494, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Electronic meeting; 20200601 - 20200612, 12 June 2020 (2020-06-12), Mobile Competence Centre ; 650, route des Lucioles ; F-06921 Sophia-Antipolis Cedex ; France , XP051898897

## Description

### Field

The present application relates to the field of wireless communication technologies, and particularly to an MBS data communication method, a network side apparatus, and a network side device.

### Background

The existing 4G MBMS (Multimedia Broadcast Multicast Service) technology mainly includes following three modes.

### 1) SC-PTM (Single Cell Point To Multiploint) mode

In this mode, the MCE (Multi-cell/multicast Coordination Entity) sends an MBMS session start request to the CN (Core Network). The CN sends an MBMS session start response to the MCE. The MCE decides to use the SC-PTM for the MBMS holder. The MCE sends an MBMS session start request to the eNB (Evolved Node B). The eNB sends an MBMS session start response to the MCE. The eNB triggers a UE (User Equipment) to receive the service data of the SC-PTM.

In the above process, the interested UE only needs to read the SC-MCCH (Single Cell-MBMS Control Channel) information and learn the scheduling information of the SC-MTCH (Single Cell-MBMS l Channel), to receive the MBMS service in the idle state or connected state.

### 2) Unicast mode

The UE receives the MBMS service in the unicast mode through a PDU (Protocol Data Unit) session establishment process. This mode requires the UE to establish a session process in the connected state, and the unicast communication of the MBMS service can only be completed through the traditional unicast PDU session establishment process.

### 3) Communication mode of MBSFN (Multicast Broadcast Single Frequency Network)

The 4G network node E-UTRAN may determine that some UEs that are receiving the MBMS service in the PTP (Point To Point) mode need to switch to the PTM (Point To Multiploint) mode for data reception, where the PTM mode refers to the communication mode of MBSFN. Then, the E-UTRAN sends an RRC signaling message to notify these UEs. If the UE decides to terminate the data reception of the PTP, the UE sends a signaling message again to notify the E-UTRAN. Finally, the UE completes the transition from the PTP mode to the MBSFN mode.

It can be seen that the current 4G MBMS technology only allows the UE to switch to the statically planned target cell, and there are only two kinds of terminal's reception requirements: connected state and idle state. The 5G NR, as a new generation radio access technology network, also has requirements for multicast/broadcast services. Moreover, there are in-active UEs under the 5G architecture. In order to enable these UEs also to maintain the continuity of reception of the MBS (Multimedia Broadcast Service), a new enhancement technology needs to be adopted to expand the current MBS service communication mechanism.

Relevant prior art documents in this technical field are: WO 2008/046337 A1, US 2011/292859 A1 and ERICSSON: "Mobility for NR MBS",3GPP DRAFT; R2-2007628.

### Brief Summary

The present application provides an MBS service data communication method, and a network side apparatus and device, so as to solve the problem of how to ensure the continuity of the UE's reception of the MBS service in the in-active state.

According to a first aspect of the embodiments of the present application, an MBS service data communication method is provided, which is applied to a network side device of a target cell and includes:
receiving an RRC connection resume request message indicating establishment of an MBS session context sent by a UE in an in-active state after the UE moves from a source cell to the target cell and determines that the target cell cannot meet an MBS session requirement;
sending a UE context request message to the source cell and obtaining MBS session context related information from the source cell for the UE in the in-active state;
performing MBS data communication after the target cell establishes the MBS session context.

Optionally, the MBS data communication is performed through a common forwarding channel with the source cell and/or an N3 channel with a core network.

Optionally, performing the MBS data communication, includes:
configuring an MBS resource and sending it to the UE through an RRC connection message after the target cell establishes the MBS session context;
receiving an RRC connection complete message returned by the UE, and transmitting MBS data to the UE.

Optionally, performing the MBS data communication, includes:
configuring an MBS resource and sending it to the UE through an RRC connection release message or an RRC reject message after the target cell establishes the MBS session context;
transmitting MBS data to the in-active UE.

Optionally, obtaining the MBS session context related information from the source cell, includes:
obtaining the MBS session context related information from a UE context response message received from the source cell, wherein:
the UE context request message carries MBS session context list information that exists in the target cell, and the UE context response message carries new MBS session context related information that does not exist in the target cell; or
the UE context response message carries all MBS session context related information related to the UE; or
the UE context request message carries MBS session context list information expected by the UE, and the UE context response message carries MBS session context related information expected by the UE.

Optionally, the method further includes:
receiving an RRC connection resume request message indicating establishment of the MBS session context sent by the in-active UE when the UE determines that the target cell cannot meet an MBS session requirement.

Optionally, performing the MBS data communication through the common forwarding channel with the source cell, includes:
initiating a common forwarding address request process to the source cell, and indicating expected MBS session context list information to the source cell;
receiving MBS data sent by the source cell on the common forwarding channel according to the expected MBS session context list information, and sending the MBS data to the UE.

Optionally, the common forwarding address request process initiated to the source cell is a process of indicating a reused UE-associated XN-U address, or a newly defined non-UE-associated process.

Optionally, the method further includes:
initiating an MBS session context release process to release the common forwarding channel.

Optionally, performing the MBS data communication through the N3 channel with the core network, includes:
triggering an N3 channel establishment process with a User Port Entity (UPF), wherein the N3 channel establishment process is a reused UE-associated path switching process, or a newly defined non-UE-associated MBS session establishment request process;
receiving MBS data sent by the UPF through the N3 channel, and sending the MBS data to the UE.

Optionally, the method further includes:
releasing the common forwarding channel after determining that the N3 channel is established and after receiving an end indication sent by the source cell on the common forwarding channel if the common forwarding channel currently exists.

According to a second aspect of the embodiments of the present application, an MBS service data communication method, applied to a network side device of a source cell, includes:
receiving a UE context request message sent by a target cell for an in-active UE after the UE moves from the source cell to the target cell;
sending MBS session context related information to the target cell, so that the target cell establishes an MBS session context and performs MBS data communication.

Optionally, the method further includes: establishing a common forwarding channel with the target cell and transmitting MBS data, so that the target cell sends the MBS data to the UE.

Optionally, sending the MBS session context related information to the target cell, includes:
sending the MBS session context related information to the target cell through a UE context response message sent to the target cell; wherein:
the UE context request message carries MBS session context list information that exists in the target cell, and the UE context response message carries new MBS session context related information that does not exist in the target cell; or
the UE context response message carries all MBS session context related information related to the UE; or
the UE context request message carries MBS session context list information expected by the UE, and the UE context response message carries MBS session context related information expected by the UE.

Optionally, establishing the common forwarding channel with the target cell and transmitting the MBS data, includes:
determining expected MBS session context list information based on a common forwarding address request process initiated by the target cell;
sending the MBS data to the target cell on the common forwarding channel based on the expected MBS session context list information.

Optionally, the common forwarding address request process is a process of indicating a reused UE-associated XN-U address, or a newly defined non-UE-associated process.

The method further includes:
initiating an MBS session context release process to release the common forwarding channel.

According to a third aspect of the embodiments of the present application, a network side device is provided, including: a memory and a processor;
wherein the memory is configured to store a computer program;
the processor is configured to read a program in the memory to:
   receive an RRC connection resume request message indicating establishment of an MBS session context sent by a UE in an in-active state after the UE moves from a source cell to the target cell and determines that the target cell cannot meet an MBS session requirement, send a UE context request message to the source cell and obtain MBS session context related information from the source cell for the in-active UE, and perform MBS data communication after the target cell establishes the MBS session context.

Optionally, the processor is further configured to perform the MBS data communication through a common forwarding channel with the source cell and/or an N3 channel with a core network.

Optionally, the processor performs the MBS data communication, including:
configuring an MBS resource and sending it to the UE through an RRC connection message after the target cell establishes the MBS session context;
receiving an RRC connection complete message returned by the UE, and transmitting MBS data to the UE.

Optionally, the processor performs the MBS data communication, including:
configuring an MBS resource and sending it to the UE through an RRC connection release message or an RRC reject message after the target cell establishes the MBS session context;
transmitting MBS data to the in-active UE.

Optionally, the processor obtains the MBS session context related information from the source cell, including:
receiving a UE context response message from the source cell to obtain the MBS session context related information;
wherein:
   the UE context request message carries MBS session context list information that exists in the target cell, and the UE context response message carries new MBS session context related information that does not exist in the target cell; or
   the UE context response message carries all MBS session context related information related to the UE; or
   the UE context request message carries MBS session context list information expected by the UE, and the UE context response message carries MBS session context related information expected by the UE.

Optionally, the processor is further configured to:
receive an RRC connection resume request message indicating establishment of the MBS session context sent by the in-active UE when the UE determines that the target cell cannot meet an MBS session requirement.

Optionally, the processor performs the MBS data communication through the common forwarding channel with the source cell, including:
initiating a common forwarding address request process to the source cell, and indicating expected MBS session context list information to the source cell;
receiving MBS data sent by the source cell on the common forwarding channel according to the expected MBS session context list information, and sending the MBS data to the UE.

Optionally, the common forwarding address request process initiated to the source cell is a process of indicating a reused UE-associated XN-U address, or a newly defined non-UE-associated process.

Optionally, the processor is further configured to:
initiate an MBS session context release process to release the common forwarding channel.

Optionally, the processor performs the MBS data communication through the N3 channel with the core network, including:
triggering an N3 channel establishment process with a UPF, wherein the N3 channel establishment process is a reused UE-associated path switching process, or a newly defined non-UE-associated MBS session establishment request process;
receiving MBS data sent by the UPF through the N3 channel, and sending the MBS data to the UE.

Optionally, the processor is further configured to:
release the common forwarding channel after determining that the N3 channel is established and after receiving an end indication sent by the source cell on the common forwarding channel if the common forwarding channel currently exists.

According to a fourth aspect of the embodiments of the present application, a network side device is provided, including: a memory and a processor;
wherein the memory is configured to store a computer program;
the processor is configured to read a program in the memory to:
   receive a context request message sent by a target cell for an in-active UE after the UE moves from the source cell to the target cell; and send MBS session context related information to the target cell, so that the target cell establishes an MBS session context and performs MBS data communication.

Optionally, the processor is further configured to: establish a common forwarding channel with the target cell and transmit MBS data, so that the target cell sends the MBS data to the UE.

Optionally, the processor sends the MBS session context related information to the target cell, including:
sending the MBS session context related information to the target cell through a UE context response message sent to the target cell; wherein:
the UE context request message carries MBS session context list information that exists in the target cell, and the UE context response message carries new MBS session context related information that does not exist in the target cell; or
the UE context response message carries all MBS session context related information related to the UE; or
the UE context request message carries MBS session context list information expected by the UE, and the UE context response message carries MBS session context related information expected by the UE.

Optionally, the processor establishes the common forwarding channel with the target cell and transmits the MBS data, including:
determining expected MBS session context list information based on a common forwarding address request process initiated by the target cell;
sending the MBS data to the target cell on the common forwarding channel based on the expected MBS session context list information.

Optionally, the common forwarding address request process is a process of indicating a reused UE-associated XN-U address, or a newly defined non-UE-associated process.

Optionally, the processor is further configured to:
initiate an MBS session context release process to release the common forwarding channel.

The MBS service data communication method and the network side device and apparatus provided in the present application have the following beneficial effects.

Compared with the existing 4G MBMS technology, the solution provided by the present application allows the UE in the in-active state to trigger a new MBS context establishment process to transmit the MBS data at a new 5G RAN target node, thereby ensuring the continuity of the MBS service communication in the in-active state dynamically and flexibly.

### Brief Description of the Drawings

In order to illustrate the technical solutions in the embodiments of the present application more clearly, the accompanying figures which need to be used in describing the embodiments will be introduced below briefly. Obviously the accompanying figures described below are only some embodiments of the present application, and other accompanying figures can also be obtained by those skilled in the art according to these accompanying figures without creative labor.
FIG. 1 is a flowchart of the main MBMS session data communication in the SC-PTM mode;
FIG. 2 is a flowchart of receiving the MBMS service in the unicast mode;
FIG. 3 is a flowchart of bearer transformation from 4G MBSFN to unicast;
FIG. 4 is a schematic diagram of an MBS service data communication system provided in an embodiment of the present application;
FIG. 5 is a schematic diagram of another MBS service data communication system provided in an embodiment of the present application;
FIG. 6 is a flowchart of the MBS data communication by resuming the MBS session context provided in an embodiment of the present application;
FIG. 7 is a flowchart of a method for transmitting the MBS service data through RRC connection resume provided in an embodiment of the present application;
FIG. 8 is a flowchart of an MBS service data communication method provided in an embodiment of the present application;
FIG. 9 is a flowchart of another MBS service data communication method provided in an embodiment of the present application;
FIG. 10 is a schematic structural diagram of a network side device serving as a base station of a target cell provided in an embodiment of the present application;
FIG. 11 is a schematic structural diagram of a network side device serving as a base station of a source cell provided in an embodiment of the present application;
FIG. 12 is a schematic structural diagram of a network side device serving as an entity device of the core network provided in an embodiment of the present application;
FIG. 13 is a schematic structural diagram of a network side device applied to a target cell provided in an embodiment of the present application;
FIG. 14 is a schematic structural diagram of a network side device applied to a source cell provided in an embodiment of the present application;
FIG. 15 is a schematic structural diagram of a network side device applied to a core network entity provided in an embodiment of the present application.

### Detailed Description of the Embodiments

In order to make the objects, technical solutions and advantages of the present application clearer, the present application will be further illustrated below in details with reference to the accompanying figures. Obviously the described embodiments are merely a part of the embodiments of the present application but not all the embodiments. Based upon the embodiments of the present application, all of other embodiments obtained by those ordinary skilled in the art without creative work pertain to the protection scope of the present application.

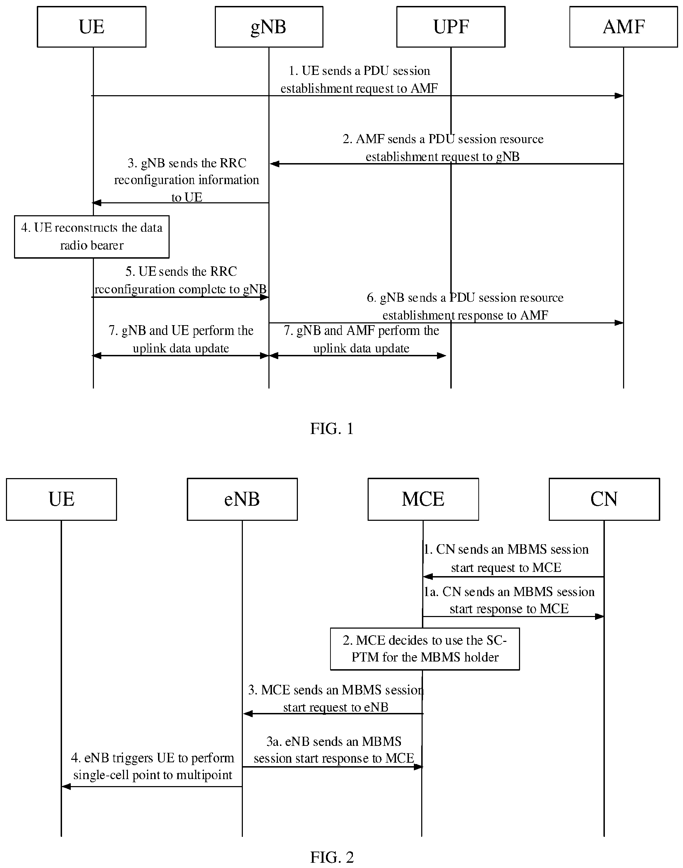

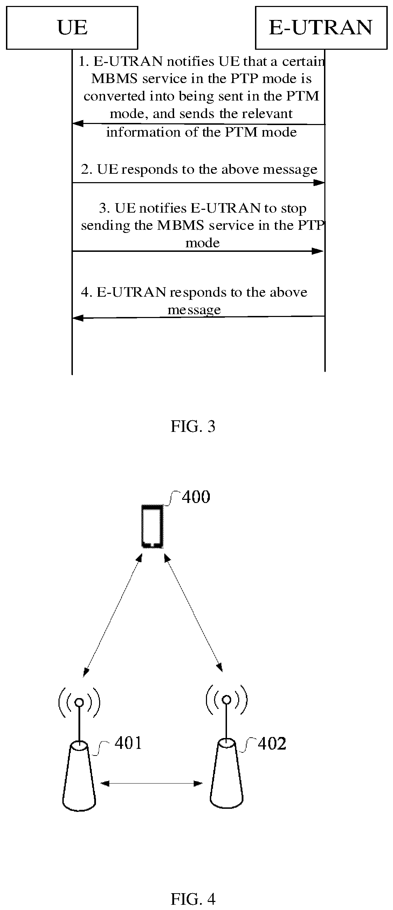

The existing 4G MBMS technology mainly includes following three modes.
1) For the SC-PTM mode, as shown in Figure 2, the main MBMS session data communication process includes following steps.
   Step 1: the CN sends an MBMS session start request to the MCE.
   Step 1a: the MCE sends an MBMS session start response to the CN.
   Step 2: the MCE decides to use the SC-PTM for the MBMS holder.
   Step 3: the MCE sends an MBMS session start request to the eNB.
   Step 3a: the eNB sends an MBMS session start response to the MCE.
   Step 4: the eNB triggers the UE to perform the single-cell point to multipoint.
   In this process, the interested UE only needs to read the SC-MCCH information and learn the scheduling information of the SC-MTCH, to receive the MBMS service in the idle state or connected state.
2) The process of receiving the MBMS service in unicast mode, as shown in Figure 1, mainly includes the following steps.
   Step 1: the UE sends a PDU session establishment request to the AMF.
   Step 2: the AMF sends a PDU session resource establishment request to the gNB.
   Step 3: the gNB sends the RRC reconfiguration information to the UE.
   Step 4: the UE reconstructs the data radio bearer.
   Step 5: the UE sends the RRC reconfiguration complete to the gNB.
   Step 6: the gNB sends a PDU session resource establishment response to the AMF.
   Step 7: the gNB, UPF and UE perform the uplink data update.
   The MBMS service can only complete the unicast communication of the MBMS service through the traditional unicast PDU session establishment process.
3) The process of bearer conversion from 4G MBSFN to unicast, as shown in Figure 3, mainly includes:
   In the above process, the 4G network node E-UTRAN may determine that some UEs that are receiving the MBMS service in the PTP mode need to switch to the PTM mode for data reception, where the PTM mode refers to the communication mode of MBSFN. Step 1: the E-UTRAN sends an RRC signaling message to notify the corresponding UE that the MBMS service in the PTP mode is converted into being sent in the PTM mode, and sends the relevant information of the PTM mode. Step 2: the UE responds to the above message. Step 3: if the UE decides to terminate the data reception of the PTP, the UE sends a signaling message again to notify the E-UTRAN. For example, the UE notifies the E-UTRAN to stop sending the MBMS service in the PTP mode. Step 4: the E-UTRAN responds to the above message. Finally, the UE completes the transition from the PTP mode to the MBSFN mode.

The existing 4G MBMS technology only allows the UE to switch to the statically planned target cell, and there are only two kinds of terminal's reception requirements: connected state and idle state. In this way, the receiving of the MBMS service by the UE in the in-active state is bound to be limited under the 5G NR architecture.

### Embodiment 1

Based on the above problem, embodiments of the present application provide a solution for MBS service data communication. When a UE in the in-active state moves to a new target cell, if the target cell does not have the MBS service context in which the UE is interested, the UE is allowed to trigger the establishment of the corresponding MBS context in the target cell by initiating an RRC resume process, so that the target cell can perform the MBS service communication for the UE based on the established context.

Embodiments of the present application further provide another solution for MBS service data communication. On the basis of establishing the corresponding MBS context in the target cell, the target cell establishes and maintains the data communication channel of the MBS session in two ways according to different situations. One way is that the target cell establishes a common forwarding channel with the source cell, and the other way is that the target cell establishes an N3 channel with the core network. Alternatively, both of the two channels are established, and the N3 channel is maintained for M3 data communication after the common forwarding channel is released.

The embodiments of the two solutions will be illustrated in detail below.

As shown in FIG. 4, an MBS service data communication system provided by an embodiment of the present application includes:
a first network side device 401, which may be a base station of a target cell, configured to obtain the MBS session context related information from a source cell by sending a UE context request message to the source cell for an in-active UE that moves to the target cell, and perform the MBS data communication after the target cell establishes the MBS session context;
a second network side device 402, which may be a base station of the source cell, configured to send the MBS session context related information to the target cell based on the UE context request messages sent by the target cell for the in-active UE, so that the target cell establishes the MBS session context and performs the MBS data communication;
a user terminal UE 400 configured to move from the source cell to the target cell in the in-active state, and perform the MBS data communication in the target cell.

In this embodiment, the way for the above-mentioned MBS service data communication system to achieve the MBS service communication is a way of performing the MBS data communication by resuming the MBS session context.

As an optional embodiment, the first network side device is further configured to establish a common forwarding channel with the target cell and transmit the MBS data, so that the target cell sends the MBS data to the UE.

The second network side device is further configured to establish a common forwarding channel with the target cell and transmit the MBS data, so that the target cell sends the MBS data to the UE.

In this embodiment, the way for the above-mentioned MBS service data communication system to achieve the MBS service communication is a way of performing the MBS data communication through the common forwarding channel.

As another optional embodiment, the first network side device in the MBS service data communication system provided in the embodiment of the present application is further configured to perform the MBS data communication through an N3 channel with the core network.

The system further includes: a third network side device configured to establish an N3 channel with the target cell for transmitting the MBS data to the in-active UE; and send the MBS data to the target cell through the N3 channel, so that the target cell sends the MBS data to the in-active UE.

In this embodiment, the way for the above-mentioned MBS service data communication system to achieve the MBS service communication is a way of performing the MBS data communication through the N3 channel.

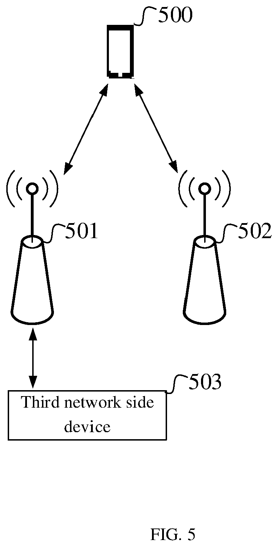

As another optional embodiment, as shown in FIG. 5, the MBS service data communication system provided in the embodiment of the present application includes:
a first network side device 501, which may be a base station of a target cell, configured to obtain the MBS session context related information from a source cell by sending a UE context request message to the source cell, for an in-active UE that moves to the target cell, and perform the MBS data communication through a common forwarding channel with the source cell and an N3 channel with the core network after the target cell establishes the MBS session context;
a second network side device 502, which may be a base station of the source cell, configured to receive the context request messages sent by the target cell for the in-active UE, send the MBS session context related information to the target cell, establish the common forwarding channel with the target cell and transmit the MBS data, so that the target cell sends the MBS data to the UE;
a third network side device 503, which may be an entity device of the core network, configured to establish the N3 channel with the target cell for transmitting the MBS data to the in-active UE; and send the MBS data to the target cell through the N3 channel, so that the target cell sends the MBS data to the in-active UE;
a user terminal UE 500 configured to move from the source cell to the target cell in the in-active state, and perform the MBS data communication in the target cell.

In this embodiment, the way for the above-mentioned MBS service data communication system to achieve the MBS service communication is a way of performing the MBS data communication through the common forwarding channel and N3 channel.

In the embodiments of the present application, the user terminal UE may refer to an access terminal, a user unit, a user station, a mobile radio station, a mobile station, a remote station, a remote terminal, a mobile device, a user terminal, a terminal, a wireless communication device, a user agent, or a user device. The access terminal may be a cellular phone, a cordless phone, a Session Initiation Protocol (SIP) phone, a Wireless Local Loop (WLL) station, a Personal Digital Assistant (PDA), a handheld device with wireless communication function, a computing device or other processing device connected to a wireless modem, a vehicle-carried device, a wearable device, a mobile station in the 5G network, or a subscription device in the future evolved Public Land Mobile Network (PLMN) network, etc.

The first/second network side device may be a generation Node B (gNB) in the 5G system, or may be a Base Transceiver Station (BTS) in the Global System of Mobile communication (GSM) system or Code Division Multiple Access (CDMA), or may be a NodeB (NB) in the Wideband Code Division Multiple Access (WCDMA) system, or may be an evolutional Node B (eNB or eNodeB) in the Long Term Evolution (LTE) system, etc.

The third network side device may be a UPF entity in the 5G system.

The ways for the MBS service data communication system to achieve the MBS service communication will be illustrated in detail below.

The first way: a way of performing the MBS data communication by resuming the MBS session context.

When a UE in the in-active state moves to a new target cell, if the target cell does not have the MBS service context in which the UE is interested, the UE is allowed to initiate an RRC resume process.

As an optional embodiment, the UE in the in-active state moves to the target cell, determines that the target cell cannot meet the MBS session requirement, and sends an RRC connection resume request message to the first network side device. The first network side device receives the RRC connection resume request message carrying the indication information similar to "MBS session establishment" to indicate the establishment of the MBS session context send by the UE in the in-active state when determining that the target cell cannot meet the MBS session requirement.

The Resume Cause in the indication information "RRC resume request message" carries indication information similar to "MBS session establishment"; or
The indication information "RRC resume request message" carries a list of MBS session services that the UE is interested in.

After receiving the RRC connection resume request message, the first network side device determines that it needs to establish an MBS session context in the target cell according to the indication. The first network side device initiates an MBS context resume process to the second network side device of the source cell, and obtains the related information of the MBS session service context to be established through this process. For example, the first network side device sends a UE context request message to the source cell, indicates through the UE context request message that the source cell needs to return the corresponding MBS session service context related information, and receives a UE context response message returned by the source cell, where the UE context response message carries the MBS session service context related information.

As an optional embodiment, the UE context request message sent by the source cell carries the MBS session context list information existing in the target cell. After receiving the UE context request message, the target cell determines the MBS session services existing in the source cell, determines which MBS services the source cell does not have according to the context related information of the existing MBS session services saved by itself, so as to send the new MBS service session context information to the source cell. That is, the UE context request message sent to the source cell carries the new MBS service session context related information that does not exist in the target cell.

As another optional embodiment, the UE context request message sent by the source cell to the target cell does not carry any MBS service session related information, but indicates that the target cell needs to return the MBS service session context information, where the indication method may be explicit or implicit indication. After receiving the UE context request message, the target cell feeds back the session context related information of all the MBS services stored locally. That is, the UE context response message returned by the target cell carries the session context related information of all the MBS services related to the UE.

As another optional embodiment, the UE context request message sent by the source cell carries the MBS session context list information expected by the UE. After receiving the UE context request message, the target cell locally queries the MBS service session context related information expected by the UE and sends it to the source cell. That is, the UE context response message sent by the target cell to the source cell carries the MBS service session context related information expected by the UE.

After obtaining the MBS session service related context information, the target cell establishes the MBS session context in the target cell according to the MBS session service related context information. After the target cell establishes the MBS session context, the MBS data communication may be performed in any of the following ways.

### 1) The MBS data communication is performed in the connected state

After establishing the MBS session context, the target cell configures the MBS resource for MBS session service data communication and sends it to the UE through an RRC connection message. After receiving the RRC connection message, the UE enters the connected state and returns an RRC connection complete message to the target cell. The target cell receives the RRC connection complete message returned by the UE and transmits the MBS data to the UE in the connected state.

### 2) The MBS data communication is performed in the in-active state

After establishing the MBS session context, the target cell configures the MBS resource, and sends the configured MBS resource to the UE through an RRC connection release message or an RRC reject message if the target cell wants the UE to enter to the in-active state to receive the MBS data. The UE enters the in-active state after receiving the RRC connection release message or RRC reject message. The target cell transmits the MBS data to the UE in the in-active state.

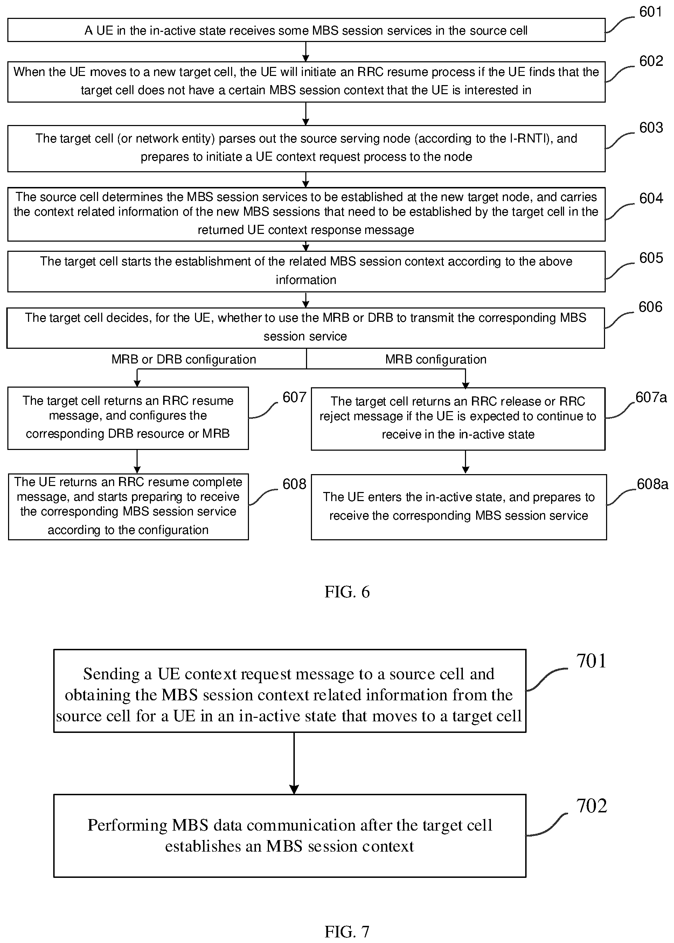

The detailed flow of the way of performing the MBS data communication by resuming the MBS session context is given below in conjunction with the flowchart, as shown in Figure 6, which mainly includes the following steps.

Step 601: a UE in the in-active state receives some MBS session services in the source cell.

Step 602: the UE moves to a new target cell and determines that the target cell does not have a certain MBS session context that the UE is interested in, and then the UE initiates an RRC resume process.

For example,, the UE sends an RRC connection resume request message (RRC resume request message) to the target cell (or network entity), where the Resume Cause in the message carries indication information similar to "MBS session establishment".

Step 603: the target cell receives the RRC connection resume request message, parses out the source serving node, and prepares to send a UE context request message to the source serving node to initiate a UE context request process.

After receiving the above RRC connection resume request message, the target cell determines the MBS session context that has existed in the current target serving node, and sends the UE context request message to the source cell, where this message is allowed to carry the MBS session context service list information that has existed in the current target service node.

The target cell may parse out the corresponding source serving node according to the I-RNTI in the RRC connection resume request message.

Step 604: the source cell receives the UE context request message, and returns a UE context response message carrying the new MBS session service context related information not stored in the source cell to the target cell.

After receiving the UE context request message, the source cell determines the MBS session service context related information that has existed in the target cell, and determines the MBS session services that need to be established at the new target node in combination with the locally-stored MBS context related information of interest to the UE. Correspondingly, the returned UE context response message carries the context related information of the new MBS sessions that need to be established by the target cell, including at least the QOS profile, multicast address and other information corresponding to these MBS sessions.

Step 605: the target cell receives the UE context response message returned by the source cell, and starts the establishment of the MBS session context according to the MBS session service related information in the message.

The MBS session context may include information such as corresponding QOS profile and multicast address, and can be added to the corresponding N3 channel multicast communication group later if necessary.

Step 606: the target cell decides, for the UE, whether to use the MRB or DRB to transmit the corresponding MBS session service, and executes step 607 or step 607a.

Step 607: the target cell sends an RRC resume message to the UE, configures the corresponding DRB resource or MRB, and uses the configured resource for MBS data communication.

Step 608: the UE returns an RRC resume complete message to the target cell after receiving the RRC resume message, and starts preparing to receive the corresponding MBS session service according to the configuration.

Step 607a: the target cell returns an RRC release or RRC reject message carrying the corresponding resource configuration to the UE.

The message explicitly or implicitly indicates "entering the in-active state" to receive the MBS session. If the MRB resource is configured and the UE is expected to continue to receive data in the in-active state, the target cell returns the RRC release or RRC reject message carrying the corresponding resource configuration to the UE.

Step 608a: the UE enters the in-active state, and prepares to receive the corresponding MBS session service according to the corresponding configuration.

It should be noted that, during the implementations, the content of the UE context request/response message involved in the above process may be changed. For example, the UE context response message returned by the source cell carries all the MBS session context related information that the UE is interested in, at least including information such as QOS profile and multicast address corresponding to these MBS sessions. Alternatively, the UE context request message sent by the target cell carries the MBS session context list information expected by the UE, and the UE context response message returned by the source cell carries the MBS service session context related information expected by the UE. The other processes are the same as above, and the specific processes will not be repeated here.

The second way: a way of performing the MBS data communication through the common forwarding channel.

When the UE in the in-active state moves to a new target cell, as an optional embodiment: the UE in the in-active state moves to the target cell and determines that the target cell cannot meet the MBS session requirement, and the target cell obtains the MBS session context related information from the source cell by sending a UE context request message to the source cell; after establishing the MBS session context, the target cell indicates the expected MBS session context list information to the source cell by initiating a common forwarding address request process to the second network side device of the source cell; and the source cell establishes a common forwarding channel with the target cell and transmits the MBS data, so that the target cell sends the MBS data to the UE. For example, the target cell receives the MBS data sent by the source cell on the common forwarding channel according to the expected MBS session context list information, and sends the MBS data to the UE.

The above-mentioned common forwarding address request process initiated by the target cell to the source cell may be, but not limited to, a process of indicating a reused UE-associated XN-U address, or a newly defined non-UE-associated address communication process.

Optionally, the target cell triggers the common forwarding address request process to the source cell. The request contains the MBS session service list information, that the local cell does not have and that is expected to be established, to be indicated to the common forwarding channel with the source cell, and the MBS session service list information that is expected to be established may be of per MBS session. Next, the source cell configures the MBS resource, enables the forwarding operation of the corresponding MBS session data packet on the common forwarding channel, and sends the MBS data to the UE according to the MBS data sent by the expected MBS session context list information.

After that, the target cell (or the network entity) is allowed to maintain this channel to transmit the MBS service data in this cell. At any time, the target cell or the source cell can actively initiate the context release process of the MBS session, the corresponding forwarding channel is also released, and the MBS data is transmitted to the UE in the in-active state.

The third way: a way of performing the MBS data communication through the N3 channel.

When the UE in the in-active state moves to a new target cell, as an optional embodiment: the UE in the in-active state moves to the target cell, determines that the target cell cannot meet the MBS session requirement, and obtains the MBS session context related information from the source cell by sending a UE context request message to the source cell; after establishing the MBS session context, the target cell triggers an N3 channel establishment process with the second network side device; the source cell establishes an N3 channel with the target cell for transmitting the MBS data to the UE in the in-active state, and sends the MBS data to the target cell through the N3 channel; and the target cell sends the MBS data to the UE in the in-active state.

As an optional embodiment, the N3 channel establishment process is a reused UE-associated path switching process, or a newly defined non-UE-associated MBS session establishment request process. The MBS data sent by the UPF is received through the N3 channel, and the MBS data is sent to the UE.

The fourth way: a way of performing the MBS data communication through the common forwarding channel and N3 channel.

When the UE in the in-active state moves to a new target cell, as an optional embodiment: the UE in the in-active state moves to the target cell, determines that the target cell cannot meet the MBS session requirement, and obtains the MBS session context related information from the source cell by sending a UE context request message to the source cell; and after establishing the MBS session context, the target cell triggers a process of initiating a common forwarding address request to the second network side device of the source cell and an N3 channel establishment process with the third network side device.

The establishment of the common forwarding channel and the establishment of the N3 channel can be triggered at the same time, or the establishment of the common forwarding channel is triggered before the establishment of the N3 channel is triggered. The detailed process of establishing the common forwarding channel and N3 channel and transmitting the MBS data can refer to the description in the above-mentioned embodiments and will not be repeated here.

It is necessary to note that the common forwarding channel is released after determining that the N3 channel is established and after receiving an end indication sent by the source cell on the common forwarding channel if the common forwarding channel currently exists. The process is: if the target cell has previously or simultaneously initiated the common forwarding address request process to the second network side device, the source cell enables the forwarding operation of the corresponding MBS session data packet on the common forwarding channel, and sends the MBS data to the UE according to the MBS data sent by the expected MBS session context list information. Subsequently, after receiving the end marker indication on the forwarding channel from the source cell, the target cell releases the common forwarding channel established for this MBS session, receives the MBS data sent by the UPF through the N3 channel, and sends the MBS data to the UE.

The system architectures and service scenarios described in the embodiments of the present application are intended to illustrate the technical solutions of the embodiments of the present application more clearly, and do not constitute a limitation on the technical solutions provided in the embodiments of the present application. As can be known by those ordinary skilled in the art, with the evolution of system architectures and the emergence of new service scenarios, the technical solutions provided in the embodiments of the present application are also applicable to similar technical problems.

### Embodiment 2

Referring to FIG. 7, an MBS service data communication method provided in embodiments of the present application includes following steps.

Step 701: sending a UE context request message to a source cell and obtaining the MBS session context related information from the source cell for an in-active UE that moves to a target cell.

Step 702: performing MBS data communication after the target cell establishes an MBS session context.

Optionally, the method further includes:
establishing a common forwarding channel with the source cell and/or an N3 channel with the core network;
performing the MBS data communication through the common forwarding channel with the source cell and/or the N3 channel with the core network.

Optionally, performing the MBS data communication, includes:
configuring an MBS resource and sending it to the UE through an RRC connection message after the target cell establishes the MBS session context;
receiving an RRC connection complete message returned by the UE, and transmitting MBS data to the UE.

Optionally, performing the MBS data communication, includes:
configuring an MBS resource and sending it to the UE through an RRC connection release message or an RRC reject message after the target cell establishes the MBS session context;
transmitting MBS data to the in-active UE.

Optionally, obtaining the MBS session context related information from the source cell, includes:
obtaining the MBS session context related information from a UE context response message received from the source cell, wherein:
the UE context request message carries MBS session context list information that exists in the target cell, and the UE context response message carries new MBS service session context related information that does not exist in the target cell; or
the UE context response message carries all MBS service session context related information related to the UE; or
the UE context request message carries MBS session context list information expected by the UE, and the UE context response message carries MBS service session context related information expected by the UE.

Optionally, the method further includes:
receiving an RRC connection resume request message indicating establishment of the MBS session context sent by the in-active UE when determining that the target cell cannot meet an MBS session requirement.

Optionally, performing the MBS data communication through the common forwarding channel with the source cell, includes:
initiating a common forwarding address request process to the source cell, and indicating expected MBS session context list information to the source cell;
receiving MBS data sent by the source cell on the common forwarding channel according to the expected MBS session context list information, and sending the MBS data to the UE.

Optionally, the common forwarding address request process initiated to the source cell is a process of indicating a reused UE-associated XN-U address, or a newly defined non-UE-associated process.

Optionally, the method further includes:
initiating an MBS session context release process to release the common forwarding channel.

Optionally, performing the MBS data communication through the N3 channel with the core network, includes:
triggering an N3 channel establishment process with a UPF, wherein the N3 channel establishment process is a reused UE-associated path switching process, or a newly defined non-UE-associated MBS session establishment request process;
receiving MBS data sent by the UPF through the N3 channel, and sending the MBS data to the UE.

Optionally, the method further includes:
releasing the common forwarding channel after determining that the N3 channel is established and after receiving an end indication sent by the source cell on the common forwarding channel if the common forwarding channel currently exists.

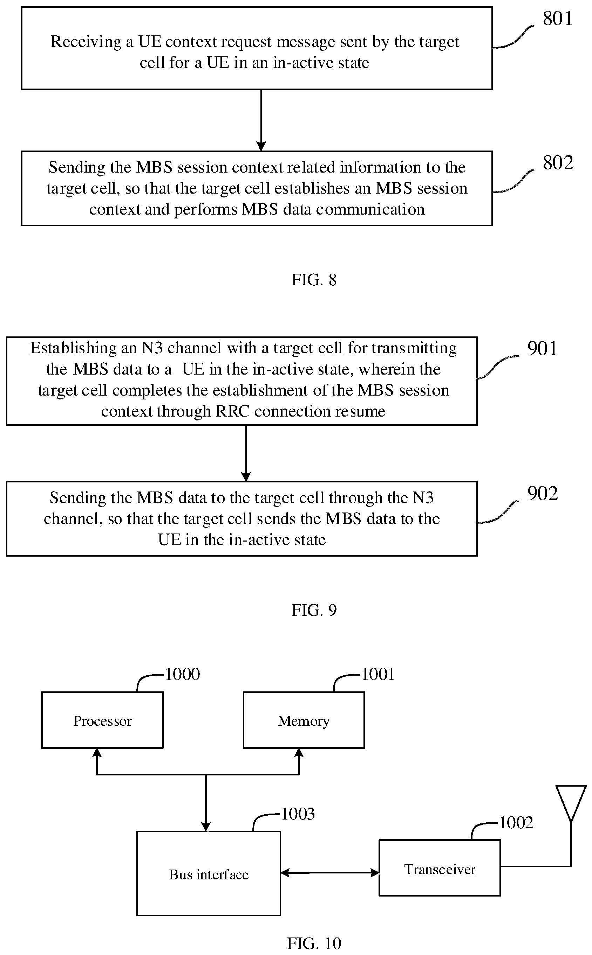

Embodiments of the present application further provide an MBS service data communication method, applied to a network side device of a target cell. The process, as shown in FIG. 8, includes following steps.

Step 801: receiving a context request message sent by the target cell for an in-active UE.

Step 802: sending the MBS session context related information to the target cell, so that the target cell establishes an MBS session context and performs MBS data communication.

Optionally, the method further includes:
obtaining the MBS session context related information from a source cell by sending a UE context request message to the source cell, and transmitting the MBS data through a common forwarding channel after the target cell establishes the MBS session context, so that the target cell sends the MBS data to the UE.

Optionally, sending the MBS session context related information to the target cell, includes:
sending the MBS session context related information to the target cell through a UE context response message sent to the target cell; wherein:
the UE context request message carries MBS session context list information that exists in the target cell, and the UE context response message carries new MBS service session context related information that does not exist in the target cell; or
the UE context response message carries all MBS service session context related information related to the UE; or
the UE context request message carries MBS session context list information expected by the UE, and the UE context response message carries MBS service session context related information expected by the UE.

Optionally, establishing the common forwarding channel with the target cell and transmitting the MBS data, includes:
determining expected MBS session context list information based on a common forwarding address request process initiated by the target cell;
sending the MBS data to the target cell on the common forwarding channel based on the expected MBS session context list information.

Optionally, the common forwarding address request process is a process of indicating a reused UE-associated XN-U address, or a newly defined non-UE-associated process.

The method further includes:
initiating an MBS session context release process to release the common forwarding channel.

Embodiments of the present application further provide an MBS service data communication method, applied to a core network device. The process, as shown in FIG. 9, includes following steps.

Step 901: establishing an N3 channel with a target cell for transmitting the MBS data to an in-active UE. The target cell completes the establishment of the MBS session context through RRC connection resume.

Step 902: sending the MBS data to the target cell through the N3 channel, so that the target cell sends the MBS data to the in-active UE.

Optionally, establishing the N3 channel with the target cell for transmitting the MBS data to the in-active UE, includes:
establishing the N3 channel through an N3 channel establishment process triggered by the target cell, where the N3 channel establishment process is a reused UE-associated path switching process, or a newly defined non-UE-associated MBS session establishment request process;
sending the MBS data to the target cell through the N3 channel.

The above MBS service data communication method provided by the embodiments of the present application and the MBS service data communication solution in the MBS service data communication system provided by the above Embodiment 1 of the present application belong to the same inventive concept, and various implementations of the MBS service data communication solution provided by the above Embodiment 1 may be applied to the MBS service data communication method in the embodiments, which will not be repeated here.

### Embodiment 3

Embodiments of the present application provide a network side device, which may be a base station of a target cell, as shown in FIG. 10, including a processor 1000, a memory 1001, a transceiver 1002 and a bus interface 1003.

The processor 1000 is responsible for managing the bus architecture and general processing, and the memory 1001 may store the data used by the processor 1000 when performing the operations. The transceiver 1002 is configured to receive and send the data under the control of the processor 1000.

The bus architecture may include any numbers of interconnected buses and bridges, and link various circuits of one or more processors represented by the processor 1000 and the memory represented by the memory 1001. The bus architecture may further link various other circuits such as peripheral device, voltage regulator and power management circuit, which are all well known in the art and thus will not be further described again herein. The bus interface provides an interface. The processor 1000 is responsible for managing the bus architecture and general processing, and the memory 1001 may store the data used by the processor 1000 when performing the operations.

The procedure disclosed by the embodiments of the present application may be applied in the processor 1000 or implemented by the processor 1000. In the implementation process, each step of the signal processing flow may be completed by the integrated logic circuit of hardware or the instruction in the form of software in the processor 1000. The processor 1000 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the present application. The general-purpose processor may be a microprocessor or any conventional processor or the like. The steps of the method disclosed in combination with the embodiments of the present application may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 1001, and the processor 1000 reads the information in the memory 1001 and completes the steps of the signal processing flow in combination with its hardware.

For example, the processor 1000 is configured to read the program in the memory 1001 to:
send a UE context request message to a source cell and obtain MBS session context related information from the source cell for an in-active UE that moves to a target cell, and perform MBS data communication after the target cell establishes an MBS session context.

Optionally, the processor is further configured to:
establish a common forwarding channel with the source cell and/or an N3 channel with a core network for MBS data communication.

Optionally, the processor performs the MBS data communication, including:
configuring an MBS resource and sending it to the UE through an RRC connection message after the target cell establishes the MBS session context;
receiving an RRC connection complete message returned by the UE, and transmitting MBS data to the UE.

Optionally, the processor performs the MBS data communication, including:
configuring an MBS resource and sending it to the UE through an RRC connection release message or an RRC reject message after the target cell establishes the MBS session context;
transmitting MBS data to the in-active UE.

Optionally, the processor obtains the MBS session context related information from the source cell, including:
obtaining the MBS session context related information from a UE context response message received from the source cell, wherein:
the UE context request message carries MBS session context list information that exists in the target cell, and the UE context response message carries new MBS service session context related information that does not exist in the target cell; or
the UE context response message carries all MBS service session context related information related to the UE; or
the UE context request message carries MBS session context list information expected by the UE, and the UE context response message carries MBS service session context related information expected by the UE.

Optionally, the processor is further configured to:
receive an RRC connection resume request message indicating establishment of the MBS session context sent by the in-active UE when determining that the target cell cannot meet an MBS session requirement.

Optionally, the processor performs the MBS data communication through the common forwarding channel with the source cell, including:
initiating a common forwarding address request process to the source cell, and indicating expected MBS session context list information to the source cell;
receiving MBS data sent by the source cell on the common forwarding channel according to the expected MBS session context list information, and sending the MBS data to the UE.

Optionally, the common forwarding address request process initiated to the source cell is a process of indicating a reused UE-associated XN-U address, or a newly defined non-UE-associated process.

Optionally, the processor is further configured to:
initiate an MBS session context release process to release the common forwarding channel.

Optionally, the processor performs the MBS data communication through the N3 channel with the core network, including:
triggering an N3 channel establishment process with a UPF, wherein the N3 channel establishment process is a reused UE-associated path switching process, or a newly defined non-UE-associated MBS session establishment request process;
receiving MBS data sent by the UPF through the N3 channel, and sending the MBS data to the UE.

Optionally, the processor is further configured to:
release the common forwarding channel after determining that the N3 channel is established and after receiving an end indication sent by the source cell on the common forwarding channel if the common forwarding channel currently exists.

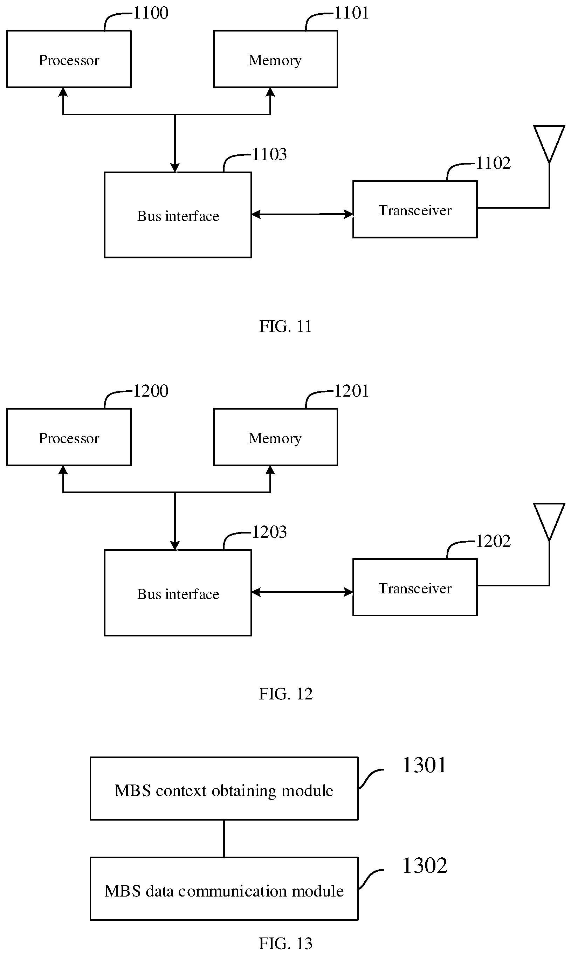

Embodiments of the present application further provide a network side device, which may be a base station of a source cell. As shown in FIG. 11, the network side device includes a processor 1100, a memory 1101, a transceiver 1102 and a bus interface 1103.

The processor 1100 is responsible for managing the bus architecture and general processing, and the memory 1101 may store the data used by the processor 1100 when performing the operations. The transceiver 1102 is configured to receive and send the data under the control of the processor 1100.

The bus architecture may include any numbers of interconnected buses and bridges, and link various circuits of one or more processors represented by the processor 1100 and the memory represented by the memory 1101. The bus architecture may further link various other circuits such as peripheral device, voltage regulator and power management circuit, which are all well known in the art and thus will not be further described again herein. The bus interface provides an interface. The processor 1100 is responsible for managing the bus architecture and general processing, and the memory 1101 may store the data used by the processor 1100 when performing the operations.

The procedure disclosed by the embodiment of the present application may be applied in the processor 1100 or implemented by the processor 1100. In the implementation process, each step of the signal processing flow may be completed by the integrated logic circuit of hardware or the instruction in the form of software in the processor 1100. The processor 1100 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the present application. The general-purpose processor may be a microprocessor or any conventional processor or the like. The steps of the method disclosed in combination with the embodiments of the present application may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 1101, and the processor 1100 reads the information in the memory 1101 and completes the steps of the signal processing flow in combination with its hardware.

For example, the processor 1100 is configured to read the program in the memory 1101 to:
receive a context request message sent by a target cell for an in-active UE;
send MBS session context related information to the target cell, so that the target cell establishes an MBS session context and performs MBS data communication.

Optionally, the processor is further configured to:
establish a common forwarding channel with the target cell and transmit MBS data, so that the target cell sends the MBS data to the UE.

Optionally, the processor sends the MBS session context related information to the target cell, including:
sending the MBS session context related information to the target cell through a UE context response message sent to the target cell; wherein:
the UE context request message carries MBS session context list information that exists in the target cell, and the UE context response message carries new MBS service session context related information that does not exist in the target cell; or
the UE context response message carries all MBS service session context related information related to the UE; or
the UE context request message carries MBS session context list information expected by the UE, and the UE context response message carries MBS service session context related information expected by the UE.

Optionally, the processor establishes the common forwarding channel with the target cell and transmits the MBS data, including:
determining expected MBS session context list information based on a common forwarding address request process initiated by the target cell;
sending the MBS data to the target cell on the common forwarding channel based on the expected MBS session context list information.

Optionally, the common forwarding address request process is a process of indicating a reused UE-associated XN-U address, or a newly defined non-UE-associated process.

Optionally, the processor is further configured to:
initiate an MBS session context release process to release the common forwarding channel.

Embodiments of the present application further provide a network side device, which may be an entity device (such as UPF) of the core network. As shown in FIG. 12, the network side device includes a processor 1200, a memory 1201, a transceiver 1202 and a bus interface 1203.

The processor 1200 is responsible for managing the bus architecture and general processing, and the memory 1201 may store the data used by the processor 1200 when performing the operations. The transceiver 1202 is configured to receive and send the data under the control of the processor 1200.

The bus architecture may include any numbers of interconnected buses and bridges, and link various circuits of one or more processors represented by the processor 1200 and the memory represented by the memory 1201. The bus architecture may further link various other circuits such as peripheral device, voltage regulator and power management circuit, which are all well known in the art and thus will not be further described again herein. The bus interface provides an interface. The processor 1200 is responsible for managing the bus architecture and general processing, and the memory 1201 may store the data used by the processor 1200 when performing the operations.

The procedure disclosed by the embodiment of the present application may be applied in the processor 1200 or implemented by the processor 1200. In the implementation process, each step of the signal processing flow may be completed by the integrated logic circuit of hardware or the instruction in the form of software in the processor 1200. The processor 1200 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the present application. The general-purpose processor may be a microprocessor or any conventional processor or the like. The steps of the method disclosed in combination with the embodiments of the present application may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 1201, and the processor 1200 reads the information in the memory 1201 and completes the steps of the signal processing flow in combination with its hardwares.

For example, the processor 1200 is configured to read the program in the memory 1201 to:
establish an N3 channel with a target cell for transmitting the MBS data to an in-active UE;
send the MBS data to the target cell through the N3 channel, so that the target cell sends the MBS data to the in-active UE.

Optionally, the processor establishes the N3 channel with the target cell for transmitting the MBS data to the in-active UE, including:
establishing the N3 channel through an N3 channel establishment process triggered by the target cell, where the N3 channel establishment process is a reused UE-associated path switching process, or a newly defined non-UE-associated MBS session establishment request process;
sending the MBS data to the target cell through the N3 channel.

Embodiments of the present application further provide a network side apparatus, which is applied to a target cell, as shown in FIG. 13, including:
an MBS context obtaining module 1301 configured to send a UE context request message to a source cell and obtain MBS session context related information from the source cell for an in-active UE that moves to a target cell;
an MBS data communication module 1302 configured to perform MBS data communication after the target cell establishes an MBS session context.

Optionally, the network side apparatus further includes:
a channel establishment module configured to establish a common forwarding channel with the source cell and/or an N3 channel with a core network;
an MBS data forwarding module configured to perform the MBS data communication through the common forwarding channel and/or N3 channel.

Optionally, the MBS data communication module performs the MBS data communication, including:
configuring an MBS resource and sending it to the UE through an RRC connection message after the target cell establishes the MBS session context;
receiving an RRC connection complete message returned by the UE, and transmitting MBS data to the UE.

Optionally, the MBS data communication module performs the MBS data communication, including:
configuring an MBS resource and sending it to the UE through an RRC connection release message or an RRC reject message after the target cell establishes the MBS session context;
transmitting MBS data to the in-active UE.

Optionally, the MBS context obtaining module obtains the MBS session context related information from the source cell, including:
obtaining the MBS session context related information from a UE context response message received from the source cell, wherein:
the UE context request message carries MBS session context list information that exists in the target cell, and the UE context response message carries new MBS service session context related information that does not exist in the target cell; or
the UE context response message carries all MBS service session context related information related to the UE; or
the UE context request message carries MBS session context list information expected by the UE, and the UE context response message carries MBS service session context related information expected by the UE.

Optionally, the MBS context obtaining module is further configured to:
receive an RRC connection resume request message indicating establishment of the MBS session context sent by the in-active UE when determining that the target cell cannot meet an MBS session requirement.

Optionally, the MBS data forwarding module performs the MBS data communication through the common forwarding channel with the source cell, including:
initiating a common forwarding address request process to the source cell, and indicating expected MBS session context list information to the source cell;
receiving MBS data sent by the source cell on the common forwarding channel according to the expected MBS session context list information, and sending the MBS data to the UE.

Optionally, the common forwarding address request process initiated to the source cell is a process of indicating a reused UE-associated XN-U address, or a newly defined non-UE-associated process.

Optionally, the network side apparatus further includes:
a channel release module configured to initiate an MBS session context release process to release the common forwarding channel.

Optionally, performing the MBS data communication through the N3 channel with the core network, includes:
triggering an N3 channel establishment process with a UPF, wherein the N3 channel establishment process is a reused UE-associated path switching process, or a newly defined non-UE-associated MBS session establishment request process;
receiving MBS data sent by the UPF through the N3 channel, and sending the MBS data to the UE.

The channel establishment module is further configured to:
release the common forwarding channel after determining that the N3 channel is established and after receiving an end indication sent by the source cell on the common forwarding channel if the common forwarding channel currently exists.

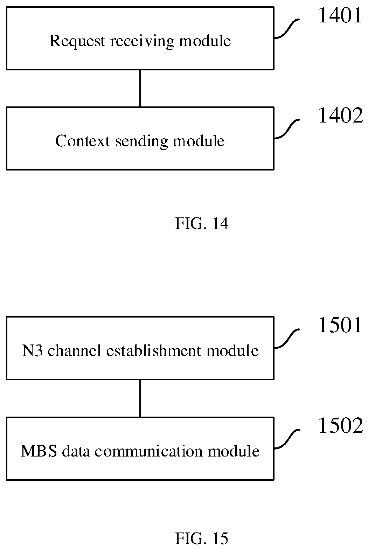

Embodiments of the present application further provide a network side apparatus, which is applied to a source cell. As shown in FIG. 14, this apparatus includes:
a request receiving module 1401 configured to receive a context request message sent by a target cell for an in-active UE;
an MBS context sending module 1402 configured to send MBS session context related information to the target cell; so that the target cell establishes an MBS session context and performs MBS data communication; or
a forwarding channel establishment module configured to establish a common forwarding channel with the target cell;
an MBS communication module configured to transmit MBS data through the common forwarding channel, so that the target cell sends the MBS data to the UE.

Optionally, the MBS context sending module sends the MBS session context related information to the target cell, including:
sending the MBS session context related information to the target cell through a UE context response message sent to the target cell; wherein:
the UE context request message carries MBS session context list information that exists in the target cell, and the UE context response message carries new MBS service session context related information that does not exist in the target cell; or
the UE context response message carries all MBS service session context related information related to the UE; or
the UE context request message carries MBS session context list information expected by the UE, and the UE context response message carries MBS service session context related information expected by the UE.

Optionally, the MBS communication module is configured to:
determine expected MBS session context list information based on a common forwarding address request process initiated by the target cell;
send the MBS data to the target cell on the common forwarding channel based on the expected MBS session context list information.

Optionally, the common forwarding address request process is a process of indicating a reused UE-associated XN-U address, or a newly defined non-UE-associated process.

Optionally, the network side apparatus further includes:
a forwarding channel release module configured to initiate an MBS session context release process to release the common forwarding channel.

Embodiments of the present application further provide a network side apparatus, which is applied to a core network entity. As shown in FIG. 15, this apparatus includes:
an N3 channel establishment module 1501 configured to establish an N3 channel with a target cell for transmitting the MBS data to an in-active UE;
an MBS data communication module 1502 configured to send the MBS data to the target cell through the N3 channel, so that the target cell sends the MBS data to the in-active UE.

Optionally, the N3 channel establishment module is configured to establish the N3 channel through an N3 channel establishment process triggered by the target cell. The N3 channel establishment process is a reused UE-associated path switching process, or a newly defined non-UE-associated MBS session establishment request process.

The above network side device/network side apparatus provided by the embodiments of the present application and the network side device in the MBS service data communication system provided by the above Embodiment 1 of the present application belong to the same inventive concept, and various implementations of the network side device provided in the above Embodiment 1 may be applied to the network side device/network side apparatus in the embodiments for implementation, which will not be repeated here.

Embodiments of the present disclosure further provide a computer readable storage medium including instructions, which, when executed on a computer, cause the computer to execute the MBS service data communication method provided by the above-mentioned embodiments.

As can be understood clearly by those skilled in the art, for the convenience and simplicity of description, the specific working processes of the above-mentioned devices and modules can refer to the corresponding processes in the method embodiments described above, and the detailed description thereof will be omitted here.

In the several embodiments provided by the present application, it should be understood that the disclosed system, devices and methods may be implemented in other manners. For example, the device embodiments described above are only schematic, for example, the division of the modules is merely a logical function division. In an actual implementation, there may be other division manners, for example, a plurality of modules or components may be combined or integrated to another system, or some features may be ignored or not performed. In addition, the displayed or discussed mutual coupling or direct coupling or communication connection may be implemented through the indirect coupling or communication connection between some interfaces, devices or modules, and may be in the electrical or other forms.

The modules described as separate components may or may not be physically separated, and the components displayed as modules may or may not be physical modules, that is, may be located in one place or may be distributed onto multiple network modules. Some or all of the modules may be selected according to the actual needs to achieve the objects of the solutions of the embodiments.

In addition, the functional modules in each embodiment of the present application may be integrated into one processing module, or each module may exist alone physically, or two or more modules may be integrated into one module. The above-mentioned integrated modules can be implemented in the form of hardware, or can be implemented in the form of software functional modules. When the integrated module is implemented in the form of software functional module and sold or used as an independent product, it may be stored in a computer readable storage medium.

The above embodiments may be implemented in whole or in part by software, hardware, firmware or any combination thereof. When implemented by software, they may be implemented in the form of a computer program product in whole or in part.

The computer program product includes one or more computer instructions. When the computer program instructions are loaded and executed on a computer, the processes or functions described in the embodiments of the present application are generated in whole or in part. The computer may be a general-purpose computer, a special-purpose computer, a computer network, or other programmable device. The computer instructions may be stored in a computer readable storage medium or transmitted from a computer readable storage medium to another computer readable storage medium. For example, the computer instructions may be transmitted from a website, computer, server or data center to another website, computer, server or data center in a wired (e.g., coaxial cable, optical fiber, Digital Subscriber Line (DSL)) or wireless (e.g., infrared, wireless, microwave, etc.) way. The computer readable storage medium may be any available medium that can be stored by a computer, or a data storage device such as server or data center that is integrated with one or more available media. The available medium may be a magnetic medium (for example, floppy disk, hard disk, magnetic tape), an optical medium (for example, DVD), or a semiconductor medium (for example, Solid State Disk (SSD)), etc.

The technical solutions provided by the embodiments of the present application are introduced in detail above, specific examples are used in the present application to illustrate the principles and embodiments of the present application, and the description of the above embodiments is only used to help the understanding of the methods of the present application and the core ideas thereof; and at the same time, those ordinary skilled in the art may make modifications on the specific embodiments and the application scope according to the ideas of the present application. In summary, the content of this specification should not be construed as a limitation on the present application.

It should be understood by those skilled in the art that the embodiments of the present application can provide methods, systems and computer program products. Thus the present application can take the form of hardware embodiments alone, software embodiments alone, or embodiments combining the software and hardware aspects. Also the present application can take the form of computer program products implemented on one or more computer usable storage mediums (including but not limited to magnetic disk memories, CD-ROMs, optical memories and the like) containing computer usable program codes therein.

The present application is described by reference to the flow charts and/or the block diagrams of the methods, the devices (systems) and the computer program products according to the present application. It should be understood that each process and/or block in the flow charts and/or the block diagrams, and a combination of processes and/or blocks in the flow charts and/or the block diagrams can be implemented by the computer program instructions. These computer program instructions may be provided to a general-purpose computer, a dedicated computer, an embedded processor, or a processor of another programmable data processing device to produce a machine, so that an apparatus for implementing the functions specified in one or more processes of the flow charts and/or one or more blocks of the block diagrams is produced by the instructions executed by the computer or the processor of another programmable data processing device.

These computer program instructions may also be stored in a computer readable memory which is capable of guiding the computer or another programmable data processing device to operate in a particular way, so that the instructions stored in the computer readable memory produce a manufacture including the instruction apparatus which implements the functions specified in one or more processes of the flow charts and/or one or more blocks of the block diagrams.

These computer program instructions may also be loaded onto the computer or another programmable data processing device, so that a series of operation steps are performed on the computer or another programmable device to produce the computer-implemented processing. Thus the instructions executed on the computer or another programmable device provide steps for implementing the functions specified in one or more processes of the flow charts and/or one or more blocks of the block diagrams.

Evidently those skilled in the art can make various modifications and variations to the present application without departing from the scope of the present application. Thus the present application is also intended to encompass these modifications and variations therein as long as these modifications and variations to the present application come into the scope of the claims of the present application.

## Claims

1. A Multimedia Broadcast Service, MBS, data communication method, applied to a network side device of a target cell, comprising:
receiving an RRC connection resume request message indicating establishment of an MBS session context sent by a UE in an in-active state after the UE moves from a source cell to the target cell and determines that the target cell cannot meet an MBS session requirement;
sending (701) a UE context request message to the source cell and obtaining MBS session context related information from the source cell for the UE in the in-active state;
performing (702) MBS data communication after the target cell establishes the MBS session context.

2. The method according to claim 1, further comprising:
performing the MBS data communication through a common forwarding channel with the source cell and/or an N3 channel with a core network.

3. The method according to claim 1, wherein said performing the MBS data communication, comprises:
configuring an MBS resource and sending the MBS resource to the UE through an RRC connection message after the target cell establishes the MBS session context; and
receiving an RRC connection complete message returned by the UE, and transmitting MBS data to the UE;
or
configuring an MBS resource and sending the MBS resource to the UE through an RRC connection release message or an RRC reject message after the target cell establishes the MBS session context; and
transmitting MBS data to the UE in the in-active state.

4. The method according to any one of claims 1 to 3, wherein said obtaining the MBS session context related information from the source cell, comprises:
obtaining the MBS session context related information from a UE context response message received from the source cell, wherein:
the UE context request message carries MBS session context list information that exists in the target cell, and the UE context response message carries new MBS session context related information that does not exist in the target cell; or
the UE context response message carries all MBS session context related information related to the UE; or
the UE context request message carries MBS session context list information expected by the UE, and the UE context response message carries MBS session context related information expected by the UE.

5. The method according to claim 2, wherein said performing the MBS data communication through the common forwarding channel with the source cell, comprises:
initiating a common forwarding address request process to the source cell, and indicating expected MBS session context list information to the source cell;
receiving MBS data sent by the source cell on the common forwarding channel according to the expected MBS session context list information, and sending the MBS data to the UE.

6. The method according to claim 5, wherein the common forwarding address request process initiated to the source cell is a process of indicating a reused UE-associated XN-U address, or a newly defined non-UE-associated process.

7. The method according to claim 5, further comprising:
initiating an MBS session context release process to release the common forwarding channel.

8. The method according to claim 2, wherein said performing the MBS data communication through the N3 channel with the core network, comprises:
triggering an N3 channel establishment process with a User Port Entity, UPF, wherein the N3 channel establishment process is a reused UE-associated path switching process, or a newly defined non-UE-associated MBS session establishment request process;
receiving MBS data sent by the UPF through the N3 channel, and sending the MBS data to the UE.

9. The method according to claim 8, further comprising:
releasing the common forwarding channel after determining that the N3 channel is established and after receiving an end indication sent by the source cell on the common forwarding channel if the common forwarding channel currently exists.

10. A Multimedia Broadcast Service, MBS, data communication method, applied to a network side device of a source cell, comprising:
receiving (801) a UE context request message sent by a target cell for a UE in an in-active state after the UE moves from the source cell to the target cell;
sending (802) MBS session context related information to the target cell, so that the target cell establishes an MBS session context and performs MBS data communication.

11. The method according to claim 10, further comprising:
establishing a common forwarding channel with the target cell and transmitting MBS data on the common forwarding channel, so that the target cell sends the MBS data to the UE.

12. The method according to claim 10, wherein said sending the MBS session context related information to the target cell, comprises:
sending the MBS session context related information to the target cell through a UE context response message sent to the target cell; wherein:
the UE context request message carries MBS session context list information that exists in the target cell, and the UE context response message carries new MBS session context related information that does not exist in the target cell; or
the UE context response message carries all MBS session context related information related to the UE; or
the UE context request message carries MBS session context list information expected by the UE, and the UE context response message carries MBS session context related information expected by the UE.

13. The method according to claim 11, wherein said establishing the common forwarding channel with the target cell and transmitting the MBS data on the common forwarding channel, comprises:
determining expected MBS session context list information based on a common forwarding address request process initiated by the target cell;
sending the MBS data to the target cell on the common forwarding channel based on the expected MBS session context list information.

14. The method according to claim 11, further comprising:
initiating an MBS session context release process to release the common forwarding channel.

15. A network side device, comprising: a memory (1001, 1101) and a processor (1000, 1100);
wherein the memory (1001, 1101) is configured to store a computer program;
the processor (1000, 1100) is configured to read the computer program from the memory to perform the MBS data communication method according to any one of claims 1-14.

## Patentansprüche

1. Multimedia-Broadcast-Service- bzw. MBS-Datenkommunikationsverfahren, das auf eine netzseitige Vorrichtung einer Zielzelle angewendet wird, umfassend:
Empfangen einer RRC-Verbindungswiederaufnahmeanforderungsnachricht, die die Einrichtung eines MBS-Sitzungskontextes angibt und durch ein UE in einem inaktiven Zustand gesendet wird, nachdem sich das UE aus einer Quellenzelle in die Zielzelle bewegt hat und bestimmt, dass die Zielzelle eine MBS-Sitzungsanforderung nicht erfüllen kann;
Senden (701) einer UE-Kontextanforderungsnachricht an die Quellenzelle und Erhalten von MBS-Sitzungskontext-bezogenen Informationen von der Quellenzelle für das UE in dem inaktiven Zustand;
Durchführen (702) einer MBS-Datenkommunikation, nachdem die Zielzelle den MBS-Sitzungskontext eingerichtet hat.

2. Verfahren nach Anspruch 1, das ferner Folgendes umfasst:
Durchführen der MBS-Datenkommunikation über einen gemeinsamen Weiterleitungskanal mit der Quellenzelle und/oder einen N3-Kanal mit einem Kernnetz.

3. Verfahren nach Anspruch 1, wobei das Durchführen der MBS-Datenkommunikation Folgendes umfasst:
Konfigurieren einer MBS-Ressource und Senden der MBS-Ressource an das UE über eine RRC-Verbindungsnachricht, nachdem die Zielzelle den MBS-Sitzungskontext eingerichtet hat; und
Empfangen einer RRC-Verbindungsabschlussnachricht, die durch das UE zurückgegeben wird, und Übertragen von MBS-Daten an das UE;
oder
Konfigurieren einer MBS-Ressource und Senden der MBS-Ressource an das UE durch eine RRC-Verbindungsfreigabenachricht oder eine RRC-Ablehnungsnachricht, nachdem die Zielzelle den MBS-Sitzungskontext eingerichtet hat; und
Übertragen von MBS-Daten an das UE in dem inaktiven Zustand.

4. Verfahren nach einem der Ansprüche 1 bis 3, wobei das Erhalten der MBS-Sitzungskontext-bezogenen Informationen von der Quellenzelle Folgendes umfasst:
Erhalten der MBS-Sitzungskontext-bezogenen Informationen aus einer UE-Kontextantwortnachricht, die von der Quellenzelle empfangen wird, wobei:
die UE-Kontextanforderungsnachricht MBS-Sitzungskontextlisteninformationen führt, die in der Zielzelle vorhanden sind, und die UE-Kontextantwortnachricht neue MBS-Sitzungskontext-bezogene Informationen führt, die nicht in der Zielzelle vorhanden sind; oder
die UE-Kontextantwortnachricht alle MBS-Sitzungskontext-bezogenen Informationen in Bezug auf das UE führt; oder
die UE-Kontextanforderungsnachricht durch das UE erwartete MBS-Sitzungskontextlisteninformationen führt und die UE-Kontextantwortnachricht durch das UE erwartete MBS-Sitzungskontext-bezogene Informationen führt.

5. Verfahren nach Anspruch 2, wobei das Durchführen der MBS-Datenkommunikation über den gemeinsamen Weiterleitungskanal mit der Quellenzelle Folgendes umfasst:
Initiieren eines gemeinsamen Weiterleitungsadressenanforderungsprozesses an die Quellenzelle und Angeben erwarteter MBS-Sitzungskontextlisteninformationen für die Quellenzelle;
Empfangen von MBS-Daten, die durch die Quellenzelle auf dem gemeinsamen Weiterleitungskanal gemäß den erwarteten MBS-Sitzungskontextlisteninformationen gesendet werden, und Senden der MBS-Daten an das UE.

6. Verfahren nach Anspruch 5, wobei der gemeinsame Weiterleitungsadressenanforderungsprozess, der an die Quellenzelle initiiert wird, ein Prozess zum Angeben einer wiederverwendeten UE-assoziierten XN-U-Adresse oder ein neu definierter nicht-UE-assoziierter Prozess ist.

7. Verfahren nach Anspruch 5, das ferner Folgendes umfasst:
Initiieren eines MBS-Sitzungskontextfreigabeprozesses, um den gemeinsamen Weiterleitungskanal freizugeben.

8. Verfahren nach Anspruch 2, wobei das Durchführen der MBS-Datenkommunikation über den N3-Kanal mit dem Kernnetz Folgendes umfasst:
Auslösen eines N3-Kanaleinrichtungsprozesses mit einer Benutzerportentität, UPF, wobei der N3-Kanaleinrichtungsprozess ein wiederverwendeter UE-assoziierter Pfadumschaltprozess oder ein neu definierter nicht-UE-assoziierter MBS-Sitzungseinrichtungsanforderungsprozess ist;
Empfangen von MBS-Daten, die durch die UPF über den N3-Kanal gesendet werden, und Senden der MBS-Daten an das UE.

9. Verfahren nach Anspruch 8, das ferner Folgendes umfasst:
Freigeben des gemeinsamen Weiterleitungskanals nach dem Bestimmen, dass der N3-Kanal eingerichtet ist, und nach dem Empfangen einer Endangabe, die durch die Quellenzelle auf dem gemeinsamen Weiterleitungskanal gesendet wird, wenn der gemeinsame Weiterleitungskanal derzeit existiert.

10. Multimedia-Broadcast-Service- bzw. MBS-Datenkommunikationsverfahren, das auf eine netzseitige Vorrichtung einer Quellenzelle angewendet wird, umfassend:
Empfangen (801) einer UE-Kontextanforderungsnachricht, die durch eine Zielzelle für ein UE in einem inaktiven Zustand gesendet wird, nachdem sich das UE aus der Quellenzelle in die Zielzelle bewegt;
Senden (802) von MBS-Sitzungskontext-bezogenen Informationen an die Zielzelle, sodass die Zielzelle einen MBS-Sitzungskontext einrichtet und eine MBS-Datenkommunikation durchführt.

11. Verfahren nach Anspruch 10, das ferner Folgendes umfasst:
Einrichten eines gemeinsamen Weiterleitungskanals mit der Zielzelle und Übertragen von MBS-Daten auf dem gemeinsamen Weiterleitungskanal, sodass die Zielzelle die MBS-Daten an das UE sendet.

12. Verfahren nach Anspruch 10, wobei das Senden der MBS-Sitzungskontext-bezogenen Informationen an die Zielzelle Folgendes umfasst:
Senden der MBS-Sitzungskontext-bezogenen Informationen an die Zielzelle über eine UE-Kontextantwortnachricht, die an die Zielzelle gesendet wird; wobei:
die UE-Kontextanforderungsnachricht MBS-Sitzungskontextlisteninformationen führt, die in der Zielzelle vorhanden sind, und die UE-Kontextantwortnachricht neue MBS-Sitzungskontext-bezogene Informationen führt, die nicht in der Zielzelle vorhanden sind; oder
die UE-Kontextantwortnachricht alle MBS-Sitzungskontext-bezogenen Informationen in Bezug auf das UE führt; oder
die UE-Kontextanforderungsnachricht durch das UE erwartete MBS-Sitzungskontextlisteninformationen führt und die UE-Kontextantwortnachricht durch das UE erwartete MBS-Sitzungskontext-bezogene Informationen führt.

13. Verfahren nach Anspruch 11, wobei das Einrichten des gemeinsamen Weiterleitungskanals mit der Zielzelle und das Übertragen der MBS-Daten auf dem gemeinsamen Weiterleitungskanal Folgendes umfasst:
Bestimmen von erwarteten MBS-Sitzungskontextlisteninformationen basierend auf einem gemeinsamen Weiterleitungsadressenanforderungsprozess, der durch die Zielzelle initiiert wird;
Senden der MBS-Daten an die Zielzelle auf dem gemeinsamen Weiterleitungskanal basierend auf den erwarteten MBS-Sitzungskontextlisteninformationen.

14. Verfahren nach Anspruch 11, das ferner Folgendes umfasst:
Initiieren eines MBS-Sitzungskontextfreigabeprozesses, um den gemeinsamen Weiterleitungskanal freizugeben.

15. Netzseitige Vorrichtung, die Folgendes umfasst:
einen Speicher (1001, 1101) und einen Prozessor (1000, 1100);
wobei der Speicher (1001, 1101) dazu ausgelegt ist, ein Computerprogramm zu speichern;
wobei der Prozessor (1000, 1100) dazu ausgelegt ist, das Computerprogramm aus dem Speicher zu lesen, um das MBS-Datenkommunikationsverfahren nach einem der Ansprüche 1-14 durchzuführen.

## Revendications

1. Procédé de communication de données pour service de diffusion multimédia, MBS, appliqué à un dispositif côté réseau d'une cellule de destination, comportant les étapes consistant à :
recevoir un message de demande de reprise de connexion RRC indiquant l'établissement d'un contexte de session MBS émis par un UE dans un état inactif après que l'UE est passé d'une cellule d'origine à la cellule de destination et a déterminé que la cellule de destination ne peut pas satisfaire une exigence de session MBS ;
envoyer (701) un message de demande de contexte d'UE à la cellule d'origine et obtenir des informations liées au contexte de session MBS à partir de la cellule d'origine pour l'UE dans l'état inactif ;
réaliser (702) une communication de données MBS après que la cellule de destination a établi le contexte de session MBS.

2. Procédé selon la revendication 1, comportant en outre :
la réalisation de la communication de données MBS à travers un canal de réacheminement commun avec la cellule d'origine et/ou un canal N3 avec un réseau central.

3. Procédé selon la revendication 1, ladite réalisation de la communication de données MBS comportant les étapes consistant à :
configurer une ressource MBS et envoyer la ressource MBS à l'UE via un message de connexion RRC après que la cellule de destination a établi le contexte de session MBS ; et
recevoir un message d'achèvement de connexion RRC renvoyé par l'UE, et transmettre des données de MBS à l'UE ;
ou
configurer une ressource MBS et envoyer la ressource MBS à l'UE via un message de libération de connexion RRC ou un message de rejet RRC après que la cellule de destination a établi le contexte de session MBS ; et
transmettre des données de MBS à l'UE dans l'état inactif.

4. Procédé selon l'une quelconque des revendications 1 à 3, ladite obtention des informations liées au contexte de session MBS de la cellule d'origine, comportant les étapes consistant à :
obtenir les informations liées au contexte de session MBS à partir d'un message de réponse de contexte d'UE reçu en provenance de la cellule d'origine :
le message de demande de contexte d'UE transportant des informations de liste de contexte de session MBS qui existent dans la cellule de destination, et le message de réponse de contexte d'UE transportant de nouvelles informations liées au contexte de session MBS qui n'existent pas dans la cellule de destination ; ou
le message de réponse de contexte d'UE transportant toutes les informations liées au contexte de session MBS lié à l'UE ; ou
le message de demande de contexte d'UE transportant des informations de liste de contexte de session MBS attendues par l'UE, et le message de réponse de contexte d'UE transportant des informations liées au contexte de session MBS attendues par l'UE.

5. Procédé selon la revendication 2, ladite réalisation de la communication de données MBS à travers le canal de réacheminement commun avec la cellule d'origine comportant les étapes consistant à :
lancer un processus de demande d'adresse de réacheminement commune vers la cellule d'origine, et
indiquer des informations attendues de liste de contexte de session MBS à la cellule d'origine ;
recevoir des données de MBS émises par la cellule d'origine sur le canal de réacheminement commun selon les informations attendues de liste de contexte de session MBS, et envoyer les données de MBS à l'UE.

6. Procédé selon la revendication 5, le processus de demande d'adresse de réacheminement commune lancé vers la cellule d'origine étant un processus d'indication d'une adresse XN-U réutilisée associée à l'UE, ou un processus nouvellement défini non associé à l'UE.

7. Procédé selon la revendication 5, comportant en outre :
le lancement d'un processus de libération de contexte de session MBS pour libérer le canal de réacheminement commun.

8. Procédé selon la revendication 2, ladite réalisation de la communication de données MBS à travers le canal N3 avec le réseau central comportant les étapes consistant à :
déclencher un processus d'établissement de canal N3 avec une entité de port d'utilisateur, UPF, le processus d'établissement de canal N3 étant un processus de commutation de trajet réutilisé associé à l'UE, ou un processus de demande d'établissement de session MBS nouvellement définie non associée à l'UE ;
recevoir des données de MBS émises par l'UPF à travers le canal N3, et envoyer les données de MBS à l'UE.

9. Procédé selon la revendication 8, comportant en outre :
la libération du canal de réacheminement commun après avoir déterminé que le canal N3 est établi et après avoir reçu une indication de fin émise par la cellule d'origine sur le canal de réacheminement commun si le canal de réacheminement commun existe actuellement.

10. Procédé de communication de données pour service de diffusion multimédia, MBS, appliqué à un dispositif côté réseau d'une cellule d'origine, comportant les étapes consistant à :
recevoir (801) un message de demande de contexte d'UE émis par une cellule de destination pour un UE dans un état inactif après que l'UE est passé de la cellule d'origine à la cellule de destination ;
envoyer (802) des informations liées au contexte de session MBS à la cellule de destination, de telle sorte que la cellule de destination établisse un contexte de session MBS et réalise une communication de données MBS.

11. Procédé selon la revendication 10, comportant en outre :
l'établissement d'un canal de réacheminement commun avec la cellule de destination et la transmission de données de MBS sur le canal de réacheminement commun, de telle sorte que la cellule de destination envoie les données de MBS à l'UE.

12. Procédé selon la revendication 10, ledit envoi des informations liées au contexte de session MBS à la cellule de destination comportant :
l'envoi des informations liées au contexte de session MBS à la cellule de destination via un message de réponse de contexte d'UE envoyé à la cellule de destination :
le message de demande de contexte d'UE transportant des informations de liste de contexte de session MBS qui existent dans la cellule de destination, et le message de réponse de contexte d'UE transportant de nouvelles informations liées au contexte de session MBS qui n'existent pas dans la cellule de destination ; ou
le message de réponse de contexte d'UE transportant toutes les informations liées au contexte de session MBS lié à l'UE ; ou
le message de demande de contexte d'UE transportant des informations de liste de contexte de session MBS attendues par l'UE, et le message de réponse de contexte d'UE transportant des informations liées au contexte de session MBS attendues par l'UE.

13. Procédé selon la revendication 11, ledit établissement du canal de réacheminement commun avec la cellule de destination et ladite transmission des données de MBS sur le canal de réacheminement commun comportant les étapes consistant à :
déterminer des informations attendues de liste de contexte de session MBS sur la base d'un processus de demande d'adresse de réacheminement commune lancé par la cellule de destination ;
envoyer les données de MBS à la cellule de destination sur le canal de réacheminement commun sur la base des informations attendues de liste de contexte de session MBS.

14. Procédé selon la revendication 11, comportant en outre :
le lancement d'un processus de libération de contexte de session MBS pour libérer le canal de réacheminement commun.

15. Dispositif côté réseau, comportant: une mémoire (1001, 1101) et un processeur (1000, 1100) ;
la mémoire (1001, 1101) étant configurée pour stocker un programme informatique ;
le processeur (1000, 1100) étant configuré pour lire le programme informatique à partir de la mémoire pour réaliser le procédé de communication de données MBS selon l'une quelconque des revendications 1 à 14.
